# EUROPEAN PATENT APPLICATION

(11) **EP 2 169 978 A1**
(43) Date of publication of application: **31.03.2010**
(21) Application number: 08757444.8
(22) Date of filing: 16.06.2008
(51) Int. Cl.: H04Q 3/00, H04L 29/06, G06K 19/07

(54) **EQUIPMENT AND METHOD TO IMPLEMENT ADAPTIVE FUNCTIONS OF COMMUNICATION PROTOCOLS**

(30) Priority: 19.06.2007 CN 200710119076
(71) Applicant: Beijing Watchdata System Co. Ltd., Chaoyang District, Beijing 100015 (CN)
(72) Inventor: QI, Tongxin, Beijing 100015 (CN); XU, Daxing, Beijing 100015 (CN)
(74) Representative: Heinze, Ekkehard
(86) International application number: PCT/CN2008/001163
(87) International publication number: WO 2008/154815

(57) **Abstract**

An equipment and method to implement the adaptive functions of communication protocols are provided so that the smart card operation system can adaptively select the corresponding communication protocol according to that of the terminal. The equipment includes: a communication protocol setting module; a communication protocol detecting module; a communication protocol selecting module. The method includes: setting communication protocol for the smart card operation system; judging whether the communication protocol type of the smart card operation system is identical with that of the terminal; if not identical, selecting communication protocol for the smart card operation system. Therefore, the communication protocol of the smart card operation system can be adaptively selected according to the protocol of the terminal.

## Description

### Field of the Invention

The present invention relates to a communication technique, and particularly, to an equipment and method for implementing the adaptive functions of communication protocols.

### Description of the Related Art

The communication protocol is an indispensable and important component of the modem communication system. The communication protocol is called as software of a communication system, and it performs an information transmission together with the hardware (various communication devices).

The ISO14443 criterion defines two types of non-contact communication protocols: Type A and Type B. Wherein, Type A is firstly developed and utilized by companies relating to semiconductor such as Philips. And the main characteristics of Type A are that whose design is brief, the development period of application item is short, and Type A is suitable for many occasions; Type B is an open and non-contact smart card criterion, by which all reading and writing operations can be defined by the developer of the concrete application system. Therefore, Type B is accepted by many smart card manufacturers throughout the world.

Although current smart card chips generally support the two communication protocols on the physical layer, and all the smart card operation systems can apply the two communication protocols, the user must select the communication protocol used by the current smart card operation system in a manual way.

This manual selection is generally performed through some specific instructions (defined by the designer himself). For example, if a user wants to select a communication protocol of Type A, he must send these specific instructions to the smart card at first. After these specific instructions are executed, the current communication protocol of the smart card operation system becomes Type A. By the same token, if the user wants to select a communication protocol of Type B, the above process shall be repeated.

The solution of manually selecting the non-contact communication protocol of the smart card operation system has the following disadvantages: when the user adopts a smart card, he must know the type of the communication protocol used by the terminal in advance, then the type of the current communication protocol of the smart card operation system can be adjusted correspondingly, so that the type of the current communication protocol of the smart card operation system is identical with the type of the communication protocol used by the terminal. Only like this can the smart card be used normally. But many inconveniences are brought to the user, and in many cases, the user does not know which communication protocol shall be used, thus the user cannot perform corresponding function with the smart card. Particularly, when various communication protocols are available, such as five types of communication protocols Type C/ Type D/ Type E/Type F/ Type G, it is more difficult to ensure that the communication can be carried out smoothly.

### Summary of the Invention

The object of the present invention is to provide an equipment and method for implementing the adaptive functions of communication protocols, so that the smart card operation system can automatically select a communication protocol corresponding to the terminal according to the communication protocol of the terminal.

The equipment for implementing adaptive functions of communication protocols according to the present invention adopts the following technical solution:

An equipment for implementing adaptive functions of communication protocols, comprises:
a communication protocol setting module for setting communication protocols for the smart card operation system;
a communication protocol detecting module for judging whether the communication protocol of the smart card operation system is identical with that of a terminal; and
a communication protocol selecting module for, when the communication protocol of the smart card operation system is not identical with that of the terminal, selecting a communication protocol identical with that of the terminal for the smart card operation system.

The equipment further comprises:
a communication module for, when the communication protocol of the smart card operation system is identical with that of the terminal, establishing a communication between the smart card operation system and the terminal.

The equipment further comprises:
an initialization module for initializing a current communication protocol identifier of the smart card operation system; and
the communication protocol setting module is used for, according to the current communication protocol identifier, configuring a communication protocol corresponding to the current communication protocol identifier for the smart card operation system.

The communication protocol detecting module, according to the command from the terminal for establishing communication connections, judges whether the command is identical with that in the current communication protocol of the smart card operation system.

The communication protocol selecting module, according to the priorities of the communication protocols, inquiries each of the communication protocols supported by the smart card operation system in turn, and thus modifies the communication protocol identifier, when the command from the terminal for establishing communication connections is not identical with that in the current communication protocol of the smart card operation system.

The communication protocol setting module comprises at least one communication protocol initialization sub-module; and
the communication protocol initialization sub-module is adopted for initializing parameters of the communication protocol used by the smart card operation system.

The parameters of the communication protocol include: the type of modulation and demodulation, and the communication rate.

The equipment for implementing adaptive functions of communication protocols according to the present invention can, according to the communication protocol of the smart card operation system having been set, utilize the communication protocol detecting module to judge whether the communication protocol of the smart card operation system is identical with that of the terminal; and if not identical, utilize the communication protocol selecting module to select a communication protocol identical with that of the terminal for the smart card operation system. Thus inconveniences caused by the manual selection of a communication protocol for the smart card operation system can be avoided. Therefore, even if various communication protocols are available at the same time, the smart card operation system can automatically select an appropriate communication protocol according to the protocol of the terminal.

The method for implementing adaptive functions of communication protocols according to the present invention adopts the following technical solution:

A method for implementing adaptive functions of communication protocols comprises:
(1) setting communication protocols for the smart card operation system the smart card operation system, the communication protocols at least include the communication of the terminal;
(2) judging whether the communication protocol of the smart card operation system is identical with that of a terminal; and
(3) when the communication protocol of the smart card operation system is not identical with that of the terminal, selecting a communication protocol identical with that of the terminal for the smart card operation system.
   The method further comprises:
(4) when the communication protocol of the smart card operation system is identical with that of the terminal, establishing a communication between the smart card operation system and the terminal.
   The method between the steps (1) and (2) further comprises:
(11) initializing a communication protocol identifier of the smart card operation system; and
(12) according to the communication protocol identifier, configuring a communication protocol corresponding to the current communication protocol identifier for the smart card operation system, and initializing the parameters of the communication protocol used by the smart card operation system.

The step (2) concretely is:
according to the command from the terminal for establishing communication connections, judging whether the command is identical with that in the communication protocol of the smart card operation system.

The step (3) concretely is:
when the communication protocol of the smart card operation system is not identical with that of the terminal, inquiring each of the communication protocols supported by the smart card operation system in turn according to the priorities of the communication protocols, and thus modifying communication protocol identifier.

Inquiring each of the communication protocols supported by the smart card operation system in turn concretely is:
selecting a communication protocol one-level lower than the current communication protocol for the smart card operation system, and if the current communication protocol has the lowest priority, selecting a communication protocol of the highest priority for the smart card operation system, and modifying the current communication protocol identifier as an identifier corresponding to the communication protocol newly selected for the smart card operation system.

The step (11) concretely is:
(111) allocating an exclusive identifier to each communication protocol; and
(121) setting last communication protocol identifier through which the communication is established successfully as the current communication protocol identifier.

The parameters of the communication protocol include: the type of modulation and demodulation, and the communication rate.

The step (121) may be:
defaulting the current communication protocol identifier as the identifier corresponding to any of the communication protocols supported by the smart card operation system.

The communication protocol is Type A, Type B, Type C, Type D, Type E, Type F, or Type G communication protocol.

The method for implementing adaptive functions of communication protocols according to the present invention judges whether the communication protocol of the smart card operation system having been set is identical with that of the terminal, and if not identical, automatically selects a communication protocol for the smart card operation system, so that the communication protocol of the smart card operation system is identical with that of the terminal. Thus the numerous steps of modifying the instructions during the manual selection of a communication protocol for the smart card operation system can be avoided, so that the smart card operation system can automatically select an appropriate communication protocol according to the protocol of the terminal.

### Brief Description of the Drawings

Fig. 1 is a structural diagram of the equipment for implementing adaptive functions of communication protocols according to the present invention;
Fig. 2 is a structural diagram added with a communication module on the basis of Fig. 1;
Fig. 3 is a structural diagram added with an initialization module on the basis of Fig. 2;
Fig. 4 is a flowchart of the method for implementing adaptive functions of communication protocols according to the present invention;
Fig 5 is a detailed flowchart of the method for implementing adaptive functions of communication protocols according to the present invention.

### Detailed Description of the Preferred Embodiments

The details of the present invention will be described with reference to the drawings.

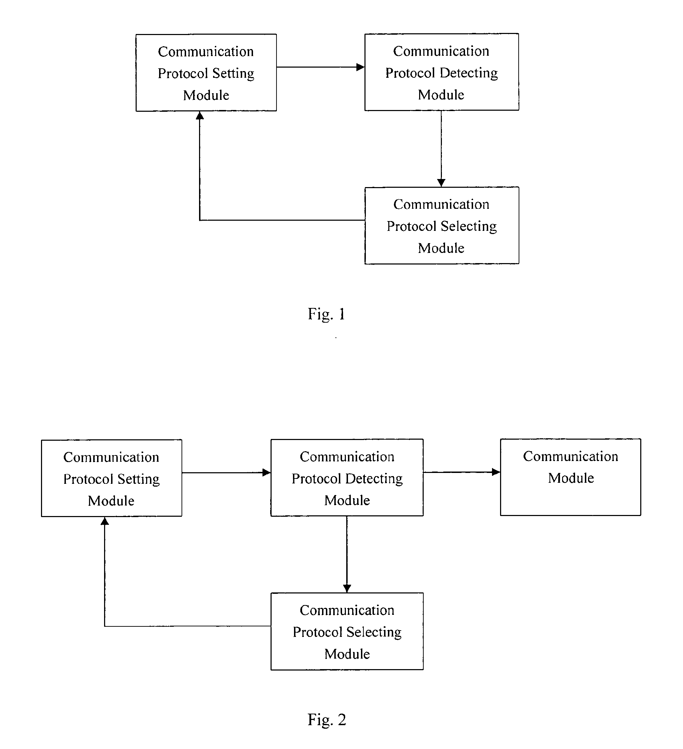

As shown in Fig. 1, the equipment for implementing adaptive functions of communication protocols of the present invention comprises: a communication protocol setting module, a communication protocol detecting module and a communication protocol selecting module. Wherein, the communication protocol setting module is used for setting a communication protocol for the smart card operation system. The communication protocol setting module at least includes the communication protocol included in a terminal; the communication protocol detecting module is used for judging whether the communication protocol of the smart card operation system is identical with that of the terminal; and the communication protocol selecting module is used for, when the communication protocol of the smart card operation system is not identical with that of the terminal, selecting a communication protocol identical with that of the terminal for the smart card operation system.

Thus, the equipment for implementing adaptive functions of communication protocols according to the present invention can, according to the communication protocol of the smart card operation system having been set, utilize the communication protocol detecting module to judge whether the communication protocol of the smart card operation system is identical with that of the terminal; and if not identical, utilize the communication protocol selecting module to select a communication protocol identical with that of the terminal for the smart card operation system. Thus inconveniences caused by the manual selection of a communication protocol for the smart card operation system can be avoided, and especially when various communication protocols are available at the same time, the smart card operation system can automatically select an appropriate communication protocol according to the protocol of the terminal.

As shown in Fig. 2, the equipment for implementing adaptive functions of communication protocols according to the present invention, on the basis of the equipment shown in Fig. 2, further comprises a communication module for establishing a communication between the smart card operation system and the terminal, and modifying the current communication protocol identifier, i.e., using last communication protocol identifier through which the communication is established successfully as the current communication protocol identifier.

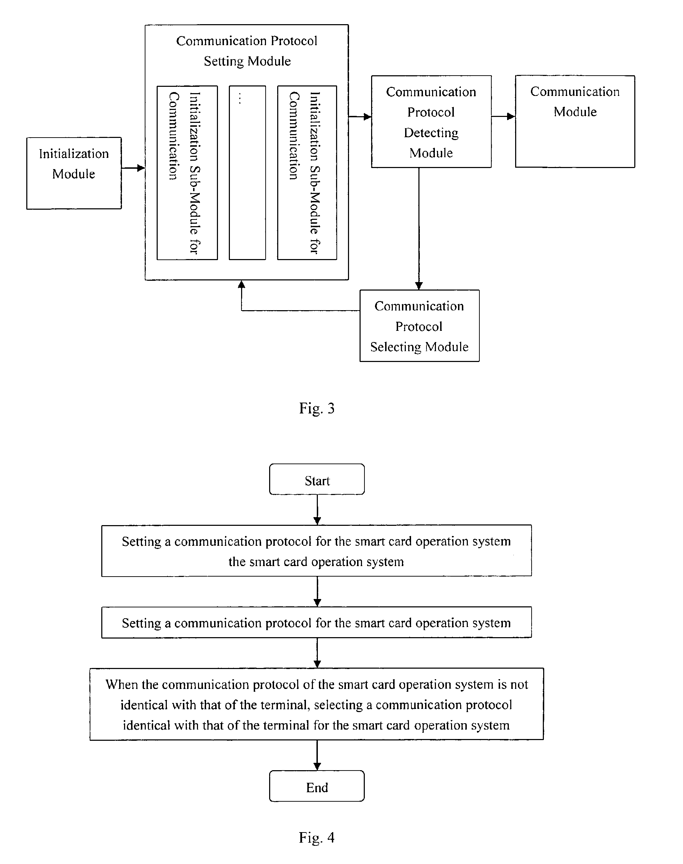

As a further improvement shown in Fig. 3, the equipment for implementing adaptive functions of communication protocols according to the present invention further comprises: an initialization module for initializing the current communication protocol identifier of the smart card operation system. And the communication protocol setting module is used for, according to the current communication protocol identifier, configuring a communication protocol corresponding to the current communication protocol identifier for the smart card operation system. The communication protocol selecting module is adopted to, when the communication protocol of the smart card operation system is not identical with that of the terminal, select a communication protocol identical with that of the terminal for the smart card operation system, and modify the current communication protocol identifier.

During the process of initializing the current communication protocol identifier by the initialization module, the smart card operation system firstly sets an exclusive identifier for each communication protocol supported by it respectively; and then sets an identifier corresponding to any of the communication protocols of Type A, Type B, Type C, Type D, Type E, Type F or Type G as the current communication protocol identifier.

Of course, after allocating an exclusive identifier to each communication protocol, the smart card operation system can also initialize the current communication protocol identifier according to last communication protocol identifier through which the communication is established successfully. The current communication protocol identifier indicates the communication protocol currently used by the smart card operation system. The last communication protocol identifier though which the communication is established successfully indicates the communication protocol used by the smart card operation system and the terminal when last communication is established successfully. This method is particularly suitable to be applied under the condition that various communication protocols are available at the same time.

In this way, the communication protocol setting module can set a communication protocol for the smart card operation system according to the current communication protocol identifier, so that the communication protocol setting module has pertinence during the process of setting the communication protocol, and especially when the smart card operation system supports various communication protocols, the adaptive efficiency can be improved greatly.

As a further improvement, the communication protocol setting module can comprise at least one communication protocol initialization module for initializing the parameters of the communication protocol used by the smart card operation system. The parameters include: the type of modulation and demodulation, and the communication rate corresponding to the communication protocol used by the smart card operation system. With respect to the communication protocol of Type A, the following parameters shall be set: selecting the type of modulation and demodulation as Type A, setting an amplitude shift keying (ASK) signal having a modulation depth of 100%, using Miller Encoding as the encoding mode, and selecting the communication rate as 106kbps, etc. With respect to the communication protocol of Type B, the following parameters shall be set: selecting the type of modulation and demodulation as Type B, setting an amplitude shift keying (ASK) signal having a modulation depth of 10%, using Non-Return to Zero (NRZ) Encoding as the encoding mode, and selecting the communication rate as 106kbps, etc. Upon different communication protocols supported by the smart card operation system, different communication protocol initialization modules can be provided. Thus, the equipment for implementing adaptive functions of communication protocols according to the present invention is suitable to the condition that various communication protocols are available at the same time.

During the processes of establishing communication connections by each of the communication protocols, the commands transmitted from the terminal to the smart card are different from each other. Taking the communication protocols of Type A and Type B as examples, when the communication protocol of Type A is used for establishing a communication connection, the terminal will firstly transmit a REQA or WUPA command, but when the communication protocol of Type B is used for establishing a communication connection, the terminal will transmit a REQB or WUPB command. Thus with respect to the communication protocol detecting module, during the process of establishing a communication connection, if the smart card operation system finds that the data received from the terminal is not the command specified in the currently used communication protocol, it means that the communication protocol of the smart card operation system is not identical with that of the terminal. For example, if the terminal uses a protocol of Type A, and the smart card operation system uses a protocol of Type B, an error signal will be generated when the smart card operation system receives a REQA or WUPA command transmitted by the terminal in a request for establishing communication connection, and then it can be judged that the communication protocol of the smart card operation system is not identical with that of the terminal.

Meanwhile, the communication protocol selecting module presets different priorities for the communication protocols supported by the smart card operation system. For example, the priority of the communication protocol of Type A is highest, the priority of the communication protocol of Type B takes a second place, and next is the priority of the communication protocol of Type C, Type D, and so on. When the communication protocol of the smart card operation system is not identical with that of the terminal, the communication protocol selecting module selects a communication protocol having the priority one-level lower than that of the current communication protocol for the smart card operation system, as the communication protocol currently used by the smart card operation system. If the current communication protocol identifier indicates that the current communication protocol has the lowest priority, the communication protocol of the highest priority will be selected for the smart card operation system as the communication protocol currently used by the smart card operation system and the current communication protocol identifier is modified. The communication protocol setting module sets the parameters of the communication protocol according to the modified communication protocol identifier, and again the communication protocol detecting module judges whether the communication protocol newly selected for the smart card operation system is identical with that of the terminal; if still not identical, the above process shall be repeated until the two communication protocols are consistent with each other.

Since the communication protocol selecting module establishes a mechanism of inquiring in turn, so that the traversal of each communication protocol supported by the smart card operation system can be achieved, a successful communication between the smart card and the terminal can be ensured even if various communication protocols are available at the same time.

In order to correspond to the equipment for implementing adaptive functions of communication protocols, the present invention also provides a method for implementing adaptive functions of communication protocols.

As shown in Fig. 4, the method for implementing adaptive functions of communication protocols comprises the following steps:
(1) setting communication protocols for the smart card operation system the smart card operation system, the communication protocols at least include the communication protocol used in a terminal;
(2) judging whether the communication protocol of the smart card operation system is identical with that of the terminal; and
(3) when the communication protocol of the smart card operation system is not identical with that of the terminal, selecting a communication protocol identical with that of the terminal for the smart card operation system.

The method for implementing adaptive functions of communication protocols according to the present invention judges whether the communication protocol of the smart card operation system having been set is identical with that of the terminal, and if not identical, automatically selects a communication protocol for the smart card operation system, so that the communication protocol of the smart card operation system is identical with that of the terminal. Thus the numerous instructions transmission during the manual selection of a communication protocol for the smart card operation system can be avoided, so that the smart card operation system can automatically select an appropriate communication protocol according to the protocol of the terminal.

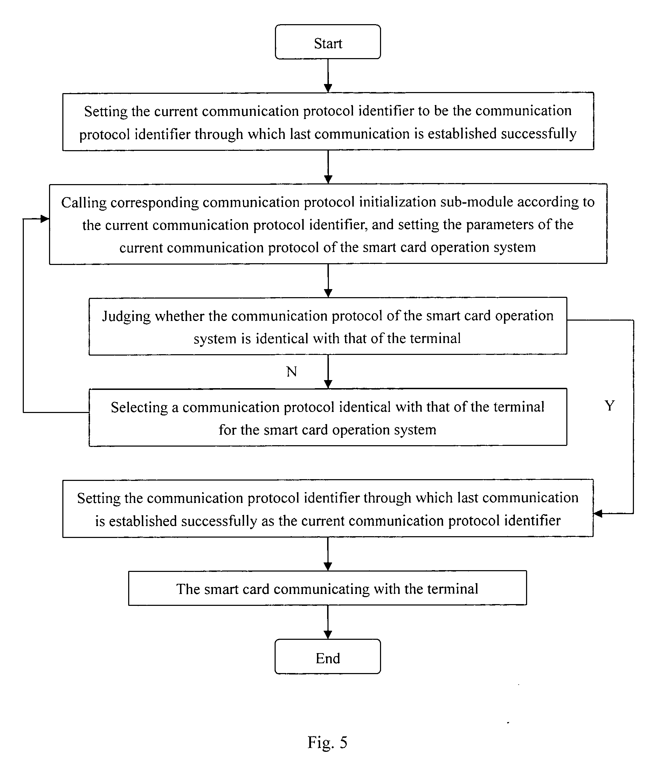

As shown in Fig. 5, the detail process of the method for implementing adaptive functions of communication protocols according to the present invention is described as follows:
(S1) allocating an exclusive identifier to each communication protocol respectively, and the current communication protocol identifier is set as last communication protocol identifier through which last communication is established successfully;
   The current communication protocol identifier indicates the communication protocol currently used by the smart card operation system. The last communication protocol identifier through which last communication is established successfully indicates the communication protocol used by the smart card operation system and the terminal when last communication is established successfully.
(S2) calling corresponding communication protocol initialization sub-module in the communication protocol setting module according to the current communication protocol identifier, and setting the parameters of the current communication protocol of the smart card operation system;
   The parameters include: the type of modulation and demodulation, and the communication rate corresponding to the communication protocol used by the smart card operation system. With respect to the communication protocol of Type A, the following parameters shall be set: selecting the type of modulation and demodulation as Type A, setting an amplitude shift keying (ASK) signal having a modulation depth of 100%, using Miller Encoding as the encoding mode, and selecting the communication rate as 106kbps, etc. With respect to the communication protocol of Type B, the following parameters shall be set: selecting the type of modulation and demodulation as Type B, setting an amplitude shift keying (ASK) signal having a modulation depth of 10%, using Non-Return to Zero (NRZ) Encoding as the encoding mode, and selecting the communication rate as 106kbps, etc.
(S3) judging whether the communication protocol of the smart card operation system is identical with that of the terminal, and if identical, turning to step (S5); or if not identical, turning to step (S4);
(S4) selecting the communication protocol identical with that of the terminal for the smart card operation system, and setting the current communication protocol identifier;
   The details of the step are as follows: setting different priorities for the communication protocols supported by the smart card operation system, thus, according to the current communication protocol identifier, selecting a communication protocol having the priority one-level lower than that of the current communication protocol for the smart card operation system, as the communication protocol currently used by the smart card operation system. If the current communication protocol identifier indicates that the current communication protocol has the lowest priority, selecting the communication protocol of the highest priority as the current communication protocol used by the smart card operation system, and modifying the current communication protocol identifier. Turn to step (S2).
(S5) using last communication protocol identifier through which last communication is established successfully as the current communication protocol identifier; and
(S6) establishing a communication connection between the smart card and the terminal to carry out communications.
   The step (S1) can also be carried out as follows: after allocating an exclusive identifier to each communication protocol respectively, defaulting the current communication protocol identifier as an identifier corresponding to any communication protocol supported by the smart card operation system, the communication protocol may be a protocol of Type A, Type B, Type C, Type D, Type E, Type F, Or Type G.

The method for implementing adaptive functions of communication protocols according to the present invention is detailedly described as follow with an example.

Take ISO14443 criterion as an example, under which two communication protocols of Type A and Type B are supported by the smart card operation system., Wherein the priority of the communication protocol of Type A is set as 1, and the priority of the communication protocol of Type B is set as 0, i.e., the priority of Type A is higher than that of Type B. The communication protocol identifiers of Type A and Type B are 1 and 0 respectively. The adaptive process of the communication protocol of the smart card operation system is as follows:
(1) Setting the current communication protocol identifier to be equal to the communication protocol identifier through which last communication is established successfully; and if the communication protocol identifier through which last communication is established successfully does not exist, setting the current communication protocol identifier as 1, i.e., selecting the communication protocol of Type A.
(2) If the current communication protocol identifier is 1, the communication protocol setting module calls the communication protocol initialization sub-module of Type A to initialize the parameters of Type A, otherwise calls the communication protocol initialization sub-module of Type B to initialize the parameters of Type B.
(3) The communication detecting module judges whether the current communication protocol of the smart card operation system is identical with that of the terminal, and if identical, turn to step (5), otherwise turn to step (4).
(4) If the current communication protocol identifier is 1, i.e., the current communication protocol of the smart card operation system is of Type A, modify the current communication protocol identifier as 0, i.e., selecting the communication protocol of Type B for the smart card operation system. If the current communication protocol identifier is 0, i.e., the current communication protocol of the smart card operation system is of Type B, modify the current communication protocol identifier as 1, i.e., select the communication protocol of Type A for the smart card operation system. Then turn to step (2).
(5) Set the communication protocol identifier through which last communication is established successfully to be equal to the current communication protocol identifier.
(6) The smart card establishes a communication connection with the terminal through the communication module to carry out communications.

The method for implementing adaptive functions of communication protocols according to the present invention judges whether the communication protocol of the smart card operation system having been set is identical with that of the terminal, and if not identical, automatically selects a communication protocol for the smart card operation system, so that the communication protocol of the smart card operation system is identical with that of the terminal. Thus the numerous instructions transmission during the manual selection of a communication protocol for the smart card operation system can be avoided, so that the smart card operation system can automatically select an appropriate communication protocol according to the protocol of the terminal.

Of course, the present invention can have many other embodiments. A person skilled in the art can make corresponding changes and variations without deviating from the spirit and substance of the present invention, but those changes and variations shall all fall within the protection scopes of the attached claims of the present invention.

## Claims

1. An equipment for implementing adaptive functions of communication protocols, **characterized in** comprising:
a communication protocol setting module for setting communication protocols for the smart card operation system;
a communication protocol detecting module for judging whether the communication protocol of the smart card operation system is identical with that of a terminal; and
a communication protocol selecting module for, when the communication protocol of the smart card operation system is not identical with that of the terminal, selecting a communication protocol identical with that of the terminal for the smart card operation system.

2. The equipment for implementing adaptive functions of communication protocols according to claim 1, **characterized in** further comprising:
a communication module for, when the communication protocol of the smart card operation system is identical with that of the terminal, establishing a communication between the smart card operation system and the terminal.

3. The equipment for implementing adaptive functions of communication protocols according to claim 1, **characterized in** further comprising:
an initialization module for initializing a current communication protocol identifier of the smart card operation system; and
the communication protocol setting module is used for, according to the current communication protocol identifier, configuring a communication protocol corresponding to the current communication protocol identifier for the smart card operation system.

4. The equipment for implementing adaptive functions of communication protocols according to claim 1, **characterized in that**,
the communication protocol detecting module, according to the command from the terminal for establishing communication connections, judges whether the command is identical with that in the current communication protocol of the smart card operation system.

5. The equipment for implementing adaptive functions of communication protocols according to claim 4, **characterized in that**,
the communication protocol selecting module, according to the priorities of the communication protocols, inquiries each of the communication protocols supported by the smart card operation system in turn, and thus modifies the communication protocol identifier, when the command from the terminal for establishing communication connections is not identical with that in the current communication protocol of the smart card operation system.

6. The equipment for implementing adaptive functions of communication protocols according to claim 3, **characterized in that**,
the communication protocol setting module comprises at least one communication protocol initialization sub-module; and
the communication protocol initialization sub-module is adopted for initializing parameters of the communication protocol used by the smart card operation system.

7. The equipment for implementing adaptive functions of communication protocols according to claim 6, **characterized in that**, the parameters of the communication protocol include: the type of modulation and demodulation, and the communication rate.

8. A method for implementing adaptive functions of communication protocols, **characterized in** comprising:
(1) setting communication protocols for the smart card operation system;
(2) judging whether the communication protocol of the smart card operation system is identical with that of a terminal; and
(3) when the communication protocol of the smart card operation system is not identical with that of the terminal, selecting a communication protocol identical with that of the terminal for the smart card operation system.

9. The method for implementing adaptive functions of communication protocols according to claim 8, **characterized in** further comprising:
(4) when the communication protocol of the smart card operation system is identical with that of the terminal, establishing a communication between the smart card operation system and the terminal.

10. The method for implementing adaptive functions of communication protocols according to claim 8, **characterized in that**, between the steps (1) and (2) further comprising:
(11) initializing a communication protocol identifier of the smart card operation system; and
(12) configuring a communication protocol corresponding to the current communication protocol identifier for the smart card operation system, according to the communication protocol identifier, and initializing the parameters of the communication protocol used by the smart card operation system.

11. The method for implementing adaptive functions of communication protocols according to claim 8, **characterized in that**, the step (2) concretely being:
according to the command from the terminal for establishing communication connections, judging whether the command is identical with that in the communication protocol of the smart card operation system.

12. The method for implementing adaptive functions of communication protocols according to claim 8, **characterized in that**, the step (3) concretely being:
when the communication protocol of the smart card operation system is not identical with that of the terminal, inquiring each of the communication protocols supported by the smart card operation system in turn according to the priorities of the communication protocols, and thus modifying communication protocol identifier.

13. The method for implementing adaptive functions of communication protocols according to claim 12, **characterized in that**, inquiring each of the communication protocols supported by the smart card operation system in turn concretely being:
selecting a communication protocol one-level lower than the current communication protocol for the smart card operation system, and if the current communication protocol has the lowest priority, selecting a communication protocol of the highest priority for the smart card operation system, and modifying the current communication protocol identifier as an identifier corresponding to the communication protocol newly selected for the smart card operation system.

14. The method for implementing adaptive functions of communication protocols according to claim 10, **characterized in that**, the step (11) concretely being:
(111) allocating an exclusive identifier to each communication protocol; and
(121) setting last communication protocol identifier through which the communication is established successfully as the current communication protocol identifier.

15. The method for implementing adaptive functions of communication protocols according to claim 10, **characterized in that**, the parameters of the communication protocol include: the type of modulation and demodulation, and the communication rate.

16. The method for implementing adaptive functions of communication protocols according to claim 14, **characterized in that**, the step (121) may be:
defaulting the current communication protocol identifier as the identifier corresponding to any of the communication protocols supported by the smart card operation system.

17. The method for implementing adaptive functions of communication protocols according to claim 8, **characterized in that**, the communication protocol is Type A, Type B, Type C, Type D, Type E, Type F, or Type G communication protocol.
